# EUROPEAN PATENT APPLICATION

(11) **EP 0 938 175 A1**
(43) Date of publication of application: **25.08.1999**
(21) Application number: 99200483.8
(22) Date of filing: 19.02.1999
(51) Int. Cl.: H02B 1/20, H02B 1/42

(54) **Electrical distribution equipment**

(30) Priority: 20.02.1998 NL 1008374
(71) Applicant: Holec Holland N.V., 7550 AA Hengelo (NL)
(72) Inventor: Tanuhardja, Mike Mulyana, 7559 JR Hengelo (NL)
(74) Representative: de Bruijn, Leendert C.

(57) **Abstract**

Distribution equipment for distribution of electrical energy from a power cable over an installation for energy consumption devices, comprising a tray having a base, side walls running parallel to one another and an energy supply and energy take-off side which run virtually perpendicularly to the side walls of the tray, an electrical rail system to be connected to the power cable and fixing means for one or more rows of electrical components which runs parallel to the energy supply side of the tray, the input of which components can be electrically connected to the rail system and the output of which components can be electrically connected to the installation. The fixing means and the bottom faces of the electrical components are at a larger distance from the base of the tray than the upper faces of the rails of the rail system. The rails of the rail system extend perpendicularly to the energy supply side of the tray and continues from said energy supply side as far as the last row of electrical components. Only one rail per energy supply phase is provided and the distance between the outer side surfaces facing to the side walls of the tray of the two outer rails is smaller than the distance between the side walls of the tray.

## Description

The invention relates to distribution equipment for distribution of electrical energy from a power cable over an installation for energy consumption devices, comprising a tray having a base, side walls running parallel to one another and an energy supply and energy take-off side which run virtually perpendicularly to the side walls of the tray, an electrical rail system to be connected to the power cable and fixing means for one or more rows of electrical components which run parallel to the energy supply side of the tray, the input of which components can be electrically connected to the rail system and the output of which components can be electrically connected to the installation, in which the fixing means and the bottom faces of the electrical components are at a larger distance from the base of the tray than the upper faces of rails of the rail system, and in which rails of the rail system extend perpendicularly to the energy supply side of the tray and continues from said energy supply side as far as the last row of electrical components

Distribution equipment of this type is disclosed in European Patent Application EP 0 466 043 A2.

The known distribution equipment, a so-called distribution box consists of a tray from insulating material, in which a vertical electrical supply rail system having current rails is accommodated. Said current rails could be connected by connections to components arranged in horizontal rows. The fixing means for the components lies higher than the rails.

The current rails cover the whole base of the tray and for connecting the rails to the energy supply connecting bridges are used.

The aim of the invention is to provide distribution equipment of the type mentioned in the preamble wherein the amount of wiring is reduced.

A further aim of the invention is to create space for the wiring originating from the electrical components.

Said aims are achieved according to the invention in that only one rail per energy supply phase is provided and that the distance between the outer side surfaces facing to the side walls of the tray of the two outer rails is smaller than the distance between the side walls of the tray.

Preferably the rails are located in the middle of the tray. By the configuration of the rows of electrical components and the rails of the rail system the amount of wiring which is needed to connect the components to the supply side is drastically reduced. The assembly of the rails per energy supply phase is located below the components. The free space fixed to the rails, preferable at both sides thereof could be used for feeding through the wiring, so that an advantage both in space for the wiring and in the ease of wiring during installation.

It is observed that distribution equipment comprising a vertical rail system having three rails is known. However, the three rails are at the same distance as the electrical components from the bottom of the tray of the distribution equipment and consequently there is created no space for the wiring from the components.

Preferably, the fixing means for the electrical components comprise fixing strips fixed to the tray, which fixing strips are higher than the rail system with respect to the base of the tray.

The advantage achieved by this means is that space is created for the outgoing wiring from the rows of components located closer to the supply side.

Further developments are described in the dependent claims.

The invention will be explained in more detail below with reference to the drawing. In the drawing:
Fig. 1 shows a tray for the distribution equipment according to the invention;
Fig. 2 shows a side view of the tray in Fig. 1;
Fig. 3 shows the top view of a frame for the distribution equipment according to the invention;
Fig. 4 shows a side view of the frame in Fig. 3;
Fig. 5 shows the frame in Fig. 3 that has been provided with hat-shaped rails for fixing electrical components;
Fig. 6 shows the side view of the frame in Fig. 5;
Fig. 7 shows a frame according to the invention in which a vertical and a horizontal rail system have been used;
Fig. 8 shows the side view of the frame according to Fig. 7.

The distribution equipment according to the invention for the distribution of energy from a power cable is suitable as a consumer unit for a domestic installation. With this equipment outgoing groups for distribution of electrical energy are fused and connected to the mains power supply. To this end switch and fuse components are mounted in the consumer unit.

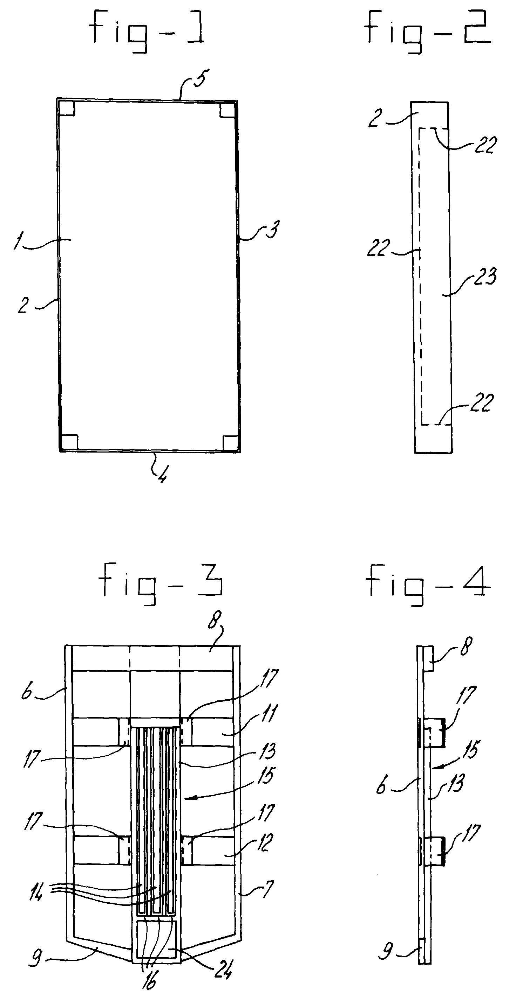

The tray for the distribution equipment shown in Figures 1 and 2 consists of a base 1, with two adjoining side walls 2 and 3 running parallel to one another. The tray also has an energy supply side 4 and energy take-off side 5 which run virtually perpendicularly to the side walls 2 and 3 of the tray.

The tray is provided in a conventional manner with fixing means for electrical components, the input of which can be electrically connected to a supply cable and the output of which can be electrically connected to an installation. The electrical components are arranged in at least one row, which row runs parallel to the energy supply side 4.

A rail system which, for example, comprises three rails is provided for electrical connection of the electrical components, arranged in rows, to a power cable. The rail system extends perpendicularly to the energy supply side 4 of the tray. The rail system starts some distance away from the energy supply side and continues as far as the last row of electrical components. The connection between the inputs of the electrical components and the rail system and between said system and the power cable can be implemented in various ways.

As a result of the use of the continuous "vertical" rail system, the amount of wiring which is needed to connect the electrical components to the power cable is drastically reduced. After all, the inputs of the electrical components which are located in rows positioned at greater distances from the first row, counted from the energy supply side, do not each have to be connected via a separate connection with, for example, a connector strip to the energy supply side to which the power cable is also connected.

The electrical components are preferably fixed to fixing strips, for example hat-shaped rails, which themselves in turn can be fixed to the tray. Said fixing strips are mounted such that they are a greater distance away from the base of the tray than is the rail system. The wiring going from the electrical components to the installation can then be pulled through underneath the hat-shaped rails. Because the inputs of the electrical components in the rows located a greater distance away can be connected directly to the continuous rails of the rail system, space is created for the outgoing wiring from the components which are located closer to the energy supply side 4 of the tray.

It is also advantageous to use a frame as implementation of the inventive concept of the rail system, as a result of which it becomes possible to prepare an installation beforehand, at least prior to assembly of the distribution equipment on site. Said frame is preferably fixed to the tray by means of snap fastenings. Any connection or snap connection can be used and since said connections are obvious to a person skilled in the art these have not been shown.

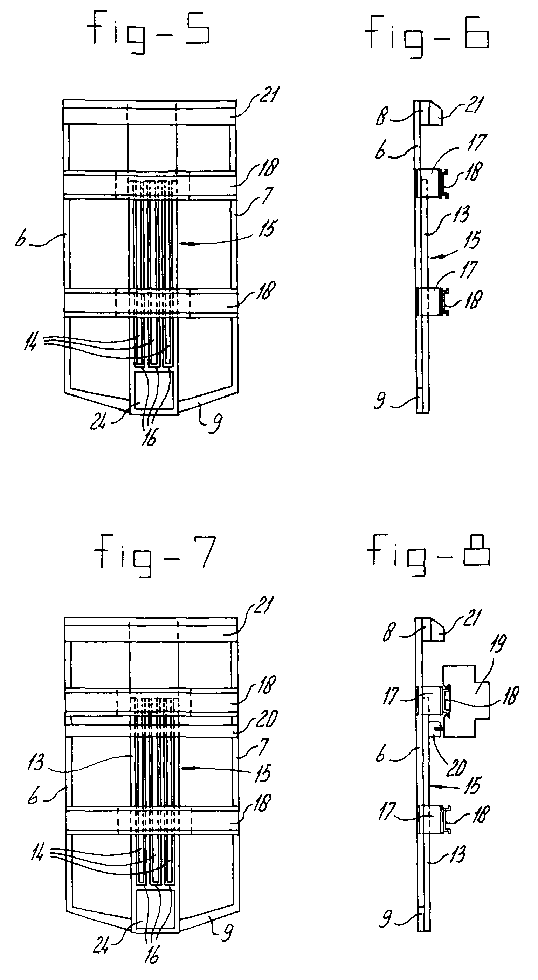

The frame shown in Figures 3 and 4 consists of the longitudinal sections 6 and 7 and the transverse end sections 8 and 9. For strengthening and to promote the rigidity of the frame, the latter is also provided with a centre strip 10 and intermediate strips 11 and 12. The centre strip 10 is provided with a thicker rail system strip 13, in which the rails 14 of the rail system 15 have been accommodated such that they are insulated. The rails 14 are located in associated grooves 16 in the rail system strip 13 and are fixed therein, for example by means of clamping elements which are not shown. The transverse strips 11 and 12 are provided with supports 17, which have a predetermined height with respect to the transverse strips 11 and 12. In Figures 3, 5 and 7 space 24 is reserved on the rail system strip (support) below the rails 14 for terminals for connecting the power supply for the domestic installation.

The way in which the supports 17 are provided with fixing strips 18 in the form of conventional hat-shaped rails can be seen in Figs. 5 and 6.

It is also pointed out that although the rail system is arranged in the middle of the frame said rail system can, of course, also be located away from the middle of said frame.

Of course, it is also possible to fix more than two hat-shaped rails 18 on the frame by means of a corresponding number of supports 17.

The construction of the rail system per se can, for example, be implemented as is disclosed in British Patent 2 034 984.

As can be seen from Figures 2 - 8, the rail system 15 continues as far as the uppermost hat-shaped rail 18. Said rail system is connected at the energy supply side 4 of the tray to the power cable in a manner which is not described in more detail. Said connection can, of course, also be made as is shown in British Patent 2 034 984 by means of a connecting cable.

The electrical switching components mounted on the hat-shaped rails 18 can be connected at the supply side to the rail with the aid of cables in accordance with British Patent 2 034 984 or in another way.

Figs 7 and 8 show that the connection between the input of the switching component 19 and the rail system 15 is made by means of an auxiliary rail system 20 running transversely to the rail system 15. The detailed implementation of the transverse rail can, for example, be reproduced after reading European Patent Applications 0 467 170 and 0 467 171.

It is also pointed out that the connection between the rail system and the auxiliary rail system can be implemented by means of cables or in some other way.

A terminal strip 21 is mounted at the energy take-off side, to which terminal strip 21, on the one hand, the installation and, on the other hand, the outputs of the electrical components 19 can be connected for the connection between said outputs and the installation. For the electrical components arranged in a row located further away from the terminal strip 21, the outgoing wiring thereof can be pulled through underneath the hat-shaped rails and terminated on the inside of the terminal strip.

The advantage of the use of a vertical rail system 15 and a horizontal auxiliary rail system 20 is that components which do or do not have the means for connection to a horizontal rail can be used in arbitrary order.

As can be seen from Figs 1 and 2, the side walls 2 and 3 can have been provided with break lines 22, by means of which the section 23 can be broken away so as to position two trays alongside one another without this also resulting in an inconvenient partition. In this case it is then possible to use two frames, which can also be coupled to one another by means of long hat-shaped rails. After preparing the installation of the frames in advance, the latter can then be snapped home in their entirety into the coupled trays already installed on site.

## Claims

1. Distribution equipment for distribution of electrical energy from a power cable over an installation for energy consumption devices, comprising a tray having a base, side walls running parallel to one another and an energy supply and energy take-off side which run virtually perpendicularly to the side walls of the tray, an electrical rail system to be connected to the power cable and fixing means for one or more rows of electrical components which run parallel to the energy supply side of the tray, the input of which components can be electrically connected to the rail system and the output of which components can be electrically connected to the installation, in which the fixing means and the bottom faces of the electrical components are at a larger distance from the base of the tray than the upper faces of rails of the rail system, and in which rails of the rail system extend perpendicularly to the energy supply side of the tray and continues from said energy supply side as far as the last row of electrical components, characterised in that only one rail per energy supply phase is provided and that the distance between the outer side surfaces facing to the side walls of the tray of the two outer rails is smaller than the distance between the side walls of the tray.

2. Distribution equipment according to claim 1, characterised in that the rails are located in the middle of the tray.

3. Distribution equipment according to Claim 1 or 2, chacterised in that the fixing means for the electrical components comprise fixing strips fixed to the tray, which fixing strips are higher than the rail system with respect to the base of the tray.

4. Distribution equipment according to Claim 1, 2 or 3, characterised in that an auxiliary rail system running perpendicularly to the rail system is added to at least one row of electrical components for connection of the inputs of the electrical components of the row concerned to the rail system.

5. Distribution equipment according to Claim 3 or 4, characterised in that the tray is provided with a frame fixed therein, which frame is provided with a rail system strip running perpendicularly to the energy supply side, in which rail system strip the rail system is accommodated such that it is electrically insulated, and with supports for the fixing strips for the electrical components, the top face of which is higher than the rail system.

6. Distribution equipment according to Claim 5, characterised in that the rail system strip is located in the middle of the frame.

7. Distribution equipment according to one of the preceding claims, characterised in that the side walls of the tray are provided with break lines for breaking away at least one section of the side wall.

8. Distribution equipment according to one of the preceding claims, characterised in that a terminal strip is mounted close to the energy take-off side of the tray, to which terminal strip the electrical components and the installation are connected to connect these to one another.

9. Frame suitable for use in distribution equipment according to one of the preceding claims.
